# EUROPÄISCHE PATENTSCHRIFT

(11) **EP 4 331 343 B1**
(45) Veröffentlichungstag und Bekanntmachung des Hinweises auf die Patenterteilung: **05.08.2026**
(21) Anmeldenummer: 23179699.6
(22) Anmeldetag: 16.06.2023
(51) Int. Cl.: A01D 41/127, G05B 13/04

(54) **VERFAHREN ZUR OPTIMIERTEN ERMITTLUNG VON MASCHINENPARAMETERN EINER LANDWIRTSCHAFTLICHEN ARBEITSMASCHINE**
METHOD FOR OPTIMIZED DETERMINATION OF MACHINE PARAMETERS OF AN AGRICULTURAL MACHINE
PROCÉDÉ DE DÉTERMINATION OPTIMISÉE DE PARAMÈTRES DE MACHINE D'UNE MACHINE DE TRAVAIL AGRICOLE

(30) Priorität: 26.08.2022 DE 102022121701; 12.01.2023 DE 102023100640
(43) Veröffentlichungstag der Anmeldung: 06.03.2024
(73) Patentinhaber: CLAAS Selbstfahrende Erntemaschinen GmbH, 33428 Harsewinkel (DE)
(72) Erfinder: Bormann, Bastian, 33334 Gütersloh (DE); Thiesmann, Waldemar, 49080 Osnabrück (DE); Baumgarten, Joachim, 48361 Beelen (DE); Wilken, Andreas, 49143 Bissendorf (DE); Warkentin, Heinrich, 33330 Gütersloh (DE); Altaleb, Mohamed, 32657 Lemgo (DE); Deeken, Henning, 49084 Osnabrück (DE)
(74) Vertreter: CLAAS Gruppe

(56) Entgegenhaltungen:
- EP-A1- 3 180 974
- EP-A2- 2 401 904
- EP-A2- 2 687 922
- US-A1- 2022 110 256

## Beschreibung

Die vorliegende Erfindung betrifft ein Verfahren zur optimierten Ermittlung von Maschinenparametern einer landwirtschaftlichen Arbeitsmaschine gemäß dem Oberbegriff von Anspruch 1 sowie eine landwirtschaftliche Arbeitsmaschine eingerichtet zur optimierten Ermittlung von Maschinenparametern der landwirtschaftlichen Arbeitsmaschine gemäß dem Oberbegriff von Anspruch 19.

Im Vordergrund stehen vorliegend landwirtschaftliche Arbeitsmaschinen aller Art. Dies betrifft Zugmaschinen, insbesondere Traktoren, aber auch Erntemaschinen wie Mähdrescher und Feldhäcksler.

Landwirtschaftliche Arbeitsmaschinen werden mittels einer Vielzahl von Maschinenparametern an ihre jeweilige landwirtschaftliche Arbeitsaufgabe angepasst. Bei diesen Maschinenparametern handelt es sich beispielsweise um eine Motordrehzahl, eine Dreschtrommeldrehzahl, ein Zapfwellendrehmoment, den Spalt eines Korncrackers, die Fahrgeschwindigkeit und dergleichen. Es sind diverse Ansätze zur Optimierung dieser Maschinenparameter hinsichtlich bestimmter Ziele bekannt. Diese Optimierung kann vom Benutzer, der insbesondere der Fahrer ist, selbst oder in Zusammenarbeit mit einem Fahrerassistenzsystem vorgenommen werden. Sie kann auch vollautomatisiert ablaufen.

Bei einem bekannten Ansatz kann der Benutzer dem Fahrerassistenzsystem Strategievorgaben machen, also beispielsweise eine vordefinierte Strategie auswählen oder mehrere konkurrierende Optimierungsziele gewichten. Das Fahrerassistenzsystem setzt diese Strategievorgaben mithilfe einer Anwendungsvorschrift, die beispielsweise kennfeldbasiert sein kann, in optimierte Maschinenparameter um.

Die EP 2 401 904 A2 beschreibt, wie bei aktuellen landwirtschaftlichen Arbeitsmaschinen aus Strategievorgaben (insbesondere die dortigen Auswahlkriterien und Optimierungskriterien) eines Benutzers der landwirtschaftlichen Arbeitsmaschine über eine Anwendungsvorschrift (dort insbesondere die Kennlinien in Kombination mit den Regelautomaten) optimierte Maschinenparameter ermittelt werden. Auch ist bekannt, dass die Anwendungsvorschrift prinzipiell an den lokalen Kontext angepasst werden kann, indem zum Beispiel ein externer Berater hinzugezogen wird, der Expertenwissen einbringt.

Aus der EP 2 687 922 A2 ist eine Weiterentwicklung dieses Prinzips bekannt, bei der die Anwendungsvorschrift, dort die Kennlinienfelder (kurz Kennfelder), auf dem Feld bei der Durchführung einer landwirtschaftlichen Arbeitsaufgabe sukzessive verbessert wird, indem unterschiedliche Arbeitspunkte angefahren werden, um den Einfluss des lokalen Kontextes (Wetter, Klima, Fruchtarten, Bodenarten, etc.) auf die theoretischen Kennlinienfelder zu berücksichtigen.

Aus der EP 3 180 974 A1 ist ein Verfahren zur optimierten Ermittlung von Maschinenparametern einer landwirtschaftlichen Arbeitsmaschine nach dem Oberbegriff des Anspruchs 1, und eine landwirtschaftliche Arbeitsmaschine eingerichtet zur optimierten Ermittlung von Maschinenparametern der landwirtschaftlichen Arbeitsmaschine nach dem Oberbegriff des Anspruchs 19 bekannt.

Problematisch bei der sukzessiven Optimierung der Maschinenparameter hinsichtlich des lokalen Kontextes ist, dass diese eine gewisse Zeit benötigt, beispielsweise 30 Minuten, um die Kennfelder so weit zu ermitteln oder zu parametrieren, dass anschließend für diverse Änderungen beispielsweise des Feldbestandes optimierte Maschinenparameter aus den Kennfeldern ermittelt werden können. Dafür kann die landwirtschaftliche Arbeitsmaschine zum Beispiel mehrere nicht-optimierte Arbeitspunkte, also Kombinationen von Maschinenparametern, durchlaufen um so Stützstellen des Kennfeldes oder der Kennfelder zu ermitteln. Während dieser Optimierungsroutine läuft die landwirtschaftliche Arbeitsmaschine also mit wechselnden und nicht optimalen Einstellungen von Maschinenparametern.

Es ist eine Herausforderung, schneller und/oder effizienter zu optimierten Maschinenparametern zu gelangen.

Der Erfindung liegt das Problem zugrunde, das bekannte Verfahren derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, dass die Optimierungsroutine verkürzt werden oder sogar entfallen kann, wenn optimierte Strategieparameter verwendet werden, die in einem ähnlichen lokalen Kontext bereits optimiert wurden. Diese Strategieparameter können insbesondere verwendet werden, um beim Start der Optimierungsroutine schon näher an den optimierten Maschinenparametern für den konkreten lokalen Kontext zu starten. Im Vergleich zu bisherigen Optimierungsroutinen, die unabhängig vom lokalen Kontext dieselben Initialstrategieparameter verwenden, wird so eine deutliche Verbesserung erzielt. Möglich wird damit auch, über die Analyse vieler bereits optimierter Maschinenparameter solche landwirtschaftlichen Arbeitsmaschinen besser an den lokalen Kontext anzupassen, die diese Anpassungen nicht selbst vornehmen können. Ihnen kann beispielsweise eine Tabelle mit optimierten Maschinenparametern abhängig von Sensormessdaten, Benutzervorgaben und/oder weiteren Einstellungen von Maschinenparametern vorgegeben werden, aus der das Fahrerassistenzsystem dann die optimierten Maschinenparameter entnimmt.

Im Einzelnen wird vorgeschlagen, dass das Fahrerassistenzsystem als Initialstrategieparameter Strategieparameter verwendet, die von mindestens einer landwirtschaftlichen Arbeitsmaschine in einem ähnlichen lokalen Kontext bereits optimiert wurden.

Bei einer besonders bevorzugten Ausgestaltung gemäß Anspruch 2 ist eine Steueranordnung vorgesehen, die eine Datenbank mit hinterlegten Strategieparametern aufweist. Aus diesen Strategieparametern wählt die Steueranordnung abhängig vom jeweiligen Kontext passende Strategieparameter aus und übermittelt diese an das Fahrerassistenzsystem. Je größer die Datenbank mit den Strategieparametern wird, desto höher ist die Wahrscheinlichkeit, für den lokalen Kontext bereits sehr gut passende Strategieparameter aus der Datenbank ermitteln zu können. Dafür können beispielsweise Mittelwerte aus vielen Strategieparametern von in ähnlichen Kontexten eingesetzten landwirtschaftlichen Arbeitsmaschinen als Initialstrategieparameter verwendet werden.

In einer weiteren bevorzugten Ausgestaltung gemäß Anspruch 3 führt die landwirtschaftliche Arbeitsmaschine während der Durchführung der landwirtschaftlichen Arbeitsaufgabe eine Optimierungsroutine durch und optimiert so die Initialstrategieparameter sukzessive weiter. Vorteilhaft dabei ist, dass diese Optimierungsroutine durch die verbesserten Initialstrategieparameter verkürzt werden kann und/oder während der Optimierungsroutine zumindest bereits mit optimaleren Maschinenparametern gestartet werden kann. Die so optimierten Maschinenparameter werden vorzugsweise wieder an die Steueranordnung übertragen.

Gemäß Anspruch 4 kann vorgesehen sein, dass der Benutzer ebenfalls in die Optimierung der landwirtschaftlichen Arbeitsmaschine eingreift und so quasi als menschlicher

Sensor und menschliche Optimierungsroutine fungiert. Zusammen mit der Optimierungsroutine des Fahrerassistenzsystems können so gemeinsam optimierte Strategieparameter ermittelt werden, die auch auf dem Expertenwissen des Benutzers basieren. Auch oder gerade diese optimierten Strategieparameter können an die Steueranordnung übertragen werden.

Anspruch 5 gibt eine bevorzugte Ausgestaltung der Strategie und insbesondere der Anwendungsvorschrift an, bei der mindestens ein Kennfeld verwendet wird, um die optimierten Maschinenparameter zu ermitteln. Im einfachsten Fall können diese abhängig von den Eingangsparametern einfach aus dem Kennfeld abgelesen werden. Insbesondere kann jedoch gemäß Anspruch 6 vorgesehen sein, dass die Strategie eine Kostenfunktion umfasst, die als Teil der Anwendungsvorschrift die Strategievorgaben gewichtet. Ziel der Kostenfunktion kann sein, vordefinierte Kosten zu minimieren, womit das Minimum der Kostenfunktion anzeigt, wo die Maschinenparameter für die vorgegebenen Strategievorgaben optimal sind. Eine Eingabe bzw. Veränderung der Strategievorgaben kann sich in einer Änderung von Gewichten der Kostenfunktion niederschlagen.

Anspruch 7 gibt eine Möglichkeit an, wie die Optimierungsroutine ausgestaltet sein kann. Demnach kann das Fahrerassistenzsystem Stützstellen des Kennfelds anfahren, indem es zugehörige Maschinenparameter tatsächlich an der landwirtschaftlichen Arbeitsmaschine einstellt und die daraus resultierenden Einflüsse auf die Strategievorgaben mittels der Sensoranordnung, direkt oder indirekt, misst. Aus den Stützstellen können die Koeffizienten und/oder eine Verschiebung eines Kennfelds ermittelt werden. Aufgrund der verbesserten Initialstrategieparameter ergibt sich insbesondere die Möglichkeit, in der Optimierungsroutine das Kennfeld oder die Kennfelder nur noch zu verschieben und keine oder nur geringe Änderungen an den Koeffizienten vorzunehmen. Wie bereits erwähnt kann vorgesehen sein, dass die Optimierungsroutine abhängig von den Initialstrategieparametern ist. Diese Ausgestaltung ist Gegenstand von Anspruch 8. Demnach können die Stützstellen abhängig von den Initialstrategieparametern gewählt werden und/oder die Optimierungsroutine kann verkürzt werden. So ergeben sich eine insgesamt effizientere Durchführung der landwirtschaftlichen Arbeitsaufgabe und eine höhere Benutzerakzeptanz.

Anspruch 9 betrifft die bevorzugte Ausgestaltung, dass die Initialstrategieparameter optimierte Maschinenparameter umfassen und diese insbesondere initial an der landwirtschaftlichen Arbeitsmaschine eingestellt werden, bis die Optimierungsroutine zumindest ein Stück weit fortgeschritten ist. Somit wird gerade zum Start der Durchführung der landwirtschaftlichen Arbeitsaufgabe eine effizientere Durchführung derselben erreicht.

Die Initialstrategieparameter können Strategievorgaben und/oder Initialstrategieparameter der Anwendungsvorschrift umfassen. Es kann also beispielsweise vorgesehen sein, dass Strategievorgaben, die von anderen Benutzern in ähnlichen lokalen Kontexten eingestellt wurden, initial verwendet werden. Diese kann der Benutzer anschließend noch verändern. Eine derartige Einstellung der Strategievorgaben durch den Benutzer ist Gegenstand von Anspruch 11.

Anspruch 12 gibt eine bevorzugte Ausgestaltung der Anwendungsvorschrift an. Demnach kann das Interface zum Benutzer in Form von Strategievorgaben konstant sein, "unter der Haube" jedoch zu einem anderen Ergebnis bei den optimierten Maschinenparametern führen. Dabei handelt es sich um eine Beschreibung der besonders bevorzugten Funktionsweise der Strategie, insbesondere der Anwendungsvorschrift.

Anspruch 13 gibt eine bevorzugte Ausgestaltung der Steueranordnung an. Demnach ist diese extern zu der landwirtschaftlichen Arbeitsmaschine angeordnet und über das Internet erreichbar.

Die Ansprüche 14 bis 17 geben bevorzugte Ausgestaltungen des lokalen Kontextes bzw. Inhalte der Daten zum lokalen Kontext, die zur Ermittlung der Ähnlichkeit verwendet werden, an. Gemäß Anspruch 14 können die Initialstrategieparameter insbesondere von Tag zu Tag auf derselben landwirtschaftlichen Arbeitsmaschine weitergegeben werden. Im einfachsten Fall startet die landwirtschaftliche Arbeitsmaschine also am nächsten Tag mit den bereits am Vortag optimierten Initialstrategieparametern. Der Zeitabstand kann jedoch auch eine längere Zeit, insbesondere eine ganze Saison, betragen.

Anspruch 15 betrifft die Möglichkeit, Initialstrategieparameter zwischen verschiedenen landwirtschaftlichen Arbeitsmaschinen auf demselben Feld oder einem in räumlicher Nähe gelegenen Feld zu übertragen. Dabei werden insbesondere Initialstrategieparameter zwischen landwirtschaftlichen Arbeitsmaschinen übertragen. Dies ist beispielsweise dann sinnvoll, wenn eine der landwirtschaftlichen Arbeitsmaschinen später mit der Durchführung der landwirtschaftlichen Arbeitsaufgabe startet oder selbst gar nicht in der Lage ist, optimierte Strategieparameter zu ermitteln. Die Wahrscheinlichkeit eines ähnlichen lokalen Kontextes ist bei nahegelegenen Feldern höher.

Die Ähnlichkeit der lokalen Kontexte kann gemäß Anspruch 16 über ein Ähnlichkeitsmaß ermittelt werden, das insbesondere Klimazonen der jeweiligen lokalen Kontexte berücksichtigt. Es hat sich herausgestellt, dass landwirtschaftliche Arbeitsmaschinen in unterschiedlichen Klimazonen unterschiedlich optimierte Maschinenparameter auch bei gleichen Strategievorgaben aufweisen, und dass zum Teil auch unterschiedliche Strategievorgaben genutzt werden. Dieser Einfluss der Klimazonen wird bei bisherigen Fahrerassistenzsystemen, die immer dieselben Initialstrategieparameter, insbesondere dasselbe initiale Kennfeld, verwenden, nicht berücksichtigt. Die initiale Optimierung der Maschinenparameter kann durch einen Big Data Ansatz hier jedoch besonders effizient verbessert werden. So können in der Steueranordnung Strategievorgaben vieler landwirtschaftlicher Arbeitsmaschinen nach Klimazonen geordnet vorliegen und beispielsweise deren Mittelwerte als initiale Strategievorgaben verwendet werden.

Gemäß Anspruch 17 können die Klimazonen nach der Köppen-Geiger-Klassifikation in ähnliche Klimazonen unterteilt sein.

Vorteilhaft ist das vorschlagsgemäße Verfahren insbesondere auch bei einem Mähdrescher. Es hat sich gezeigt, dass die Abhängigkeit von Klimazonen bei einem Mähdrescher zu deutlich unterschiedlichen optimierten Maschinenparametern führt. Diese Ausgestaltung ist Gegenstand von Anspruch 18.

Nach einer weiteren Lehre gemäß Anspruch 19, der eigenständige Bedeutung zukommt, wird eine landwirtschaftliche Arbeitsmaschine eingerichtet zur optimierten Einstellung von Maschinenparametern der landwirtschaftlichen Arbeitsmaschine beansprucht.

Dabei ist wesentlich, dass das Fahrerassistenzsystem eingerichtet ist, als Initialstrategieparameter Strategieparameter zu verwenden, die von mindestens einer landwirtschaftlichen Arbeitsmaschine in einem ähnlichen lokalen Kontext bereits optimiert wurden.

Auf alle Ausführungen zu dem vorschlagsgemäßen Verfahren darf verwiesen werden.

Im Folgenden wird die Erfindung anhand einer lediglich Ausführungsbeispiele darstellenden Zeichnung näher erläutert. In der Zeichnung zeigt
Fig. 1 das vorschlagsgemäße Verfahren in abstrahierter Form und
Fig. 2 a) die Ermittlungsroutine und b) die Optimierungsroutine.

Die vorschlagsgemäße Lösung lässt sich auf einen weiten Bereich landwirtschaftlicher Arbeitsmaschinen 1, insbesondere auf Erntemaschinen, anwenden. Dazu gehören Mähdrescher, Feldhäcksler, Zugmaschinen, insbesondere Traktoren, o. dgl.

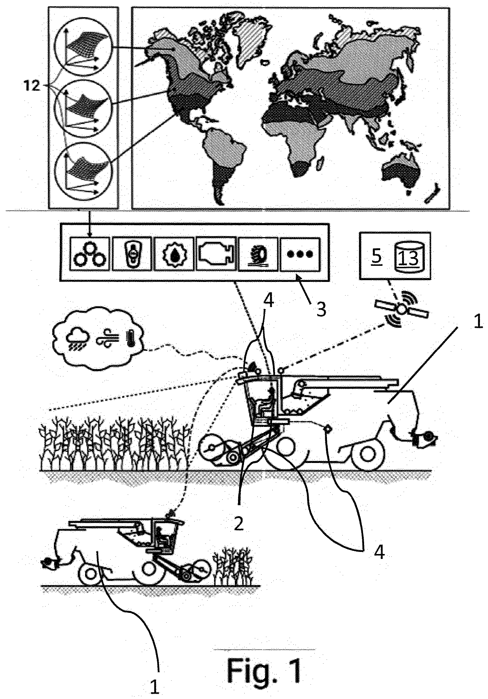

Derartige landwirtschaftliche Arbeitsmaschinen 1 werden für eine Vielzahl unterschiedlicher landwirtschaftlicher Arbeitsaufgaben verwendet. Beispielhaft zeigt Fig. 1 eine Erntetätigkeit.

Bei diesen landwirtschaftlichen Arbeitsaufgaben können an den landwirtschaftlichen Arbeitsmaschinen 1 ganz unterschiedliche Maschinenparameter eingestellt werden. Bei den Maschinenparametern handelt es sich um Maschinenparameter im engen Sinne wie die Motordrehzahl oder eine Position einer Drosselklappe. Ebenso sind Einstellungen des Heckkrafthebers und dergleichen umfasst. Grundsätzlich kann deren Einstellung durch das Fahrerassistenzsystem 2 allerdings indirekt erfolgen, indem beispielsweise Steuersignale für eine dedizierte Steuereinheit eines Arbeitsaggregats generiert und an die dedizierte Steuereinheit übertragen werden.

Diese Maschinenparametereinstellungen haben einen starken Einfluss auf das Ergebnis der landwirtschaftlichen Arbeitsaufgabe. Beispielsweise ist es möglich, ein Feld schnell abzuernten oder konkurrierend dazu eine hohe Erntequalität zu erzielen.

Das in den Figuren dargestellte und insoweit bevorzugte Ausführungsbeispiel betrifft ein Verfahren zur optimierten Ermittlung von Maschinenparametern einer landwirtschaftlichen Arbeitsmaschine 1.

Dabei ist anzumerken, dass die Optimierung der Maschinenparameter als Vorgang zu verstehen ist, bei dem ein Optimierungsziel grundsätzlich besteht, aber keineswegs immer erreicht werden wird. Optimierte Maschinenparameter 3 sind also weder optimal noch notwendigerweise immer optimaler als vorher. Sie sind lediglich das Ergebnis einer Optimierung. Auch sind nicht alle Zielgrößen der Optimierung notwendigerweise sensorisch erfassbar, insbesondere nicht immer direkt erfassbar, sondern gegebenenfalls nur indirekt ableitbar.

Die landwirtschaftliche Arbeitsmaschine 1 weist ein Fahrerassistenzsystem 2 und eine Sensoranordnung 4 auf. Wie in Fig. 1 schematisch angedeutet, führt die landwirtschaftliche Arbeitsmaschine 1 eine landwirtschaftliche Arbeitsaufgabe in einem lokalen Kontext durch.

Bei dem lokalen Kontext handelt es sich um alle Einflussgrößen, die grundsätzlich am Ort der Durchführung der landwirtschaftlichen Arbeitsaufgabe, also lokal, vorhanden sind und die Einfluss auf das Ergebnis der landwirtschaftlichen Arbeitsaufgabe nehmen. Soweit der Begriff hier verwendet wird, meint der lokale Kontext allerdings nur jenen Anteil dieser Einflussgrößen, der der landwirtschaftlichen Arbeitsmaschine 1, insbesondere dem Fahrerassistenzsystem 2, und/oder der noch zu erläuternden Steueranordnung 5 auch bekannt ist. Die Einflussgrößen können gemessen werden, jedoch auch beispielsweise von einem Wetterdienst bezogen werden. Der lokale Kontext umfasst hier und vorzugsweise das Wetter und/oder das Klima und/oder eine Fruchtart und/oder -sorte und/oder Erntebedingungen wie eine Stroh- oder Kornfeuchte und/oder gewählte Pflanzenschutzmaßnahmen und/oder einen Abreifungsgrad und/oder eine Bodenbeschaffenheit. Zusätzlich kann eine Maschinenausstattung berücksichtigt werden. Zur Ermittlung des lokalen Kontextes können GPS-Daten verwendet werden.

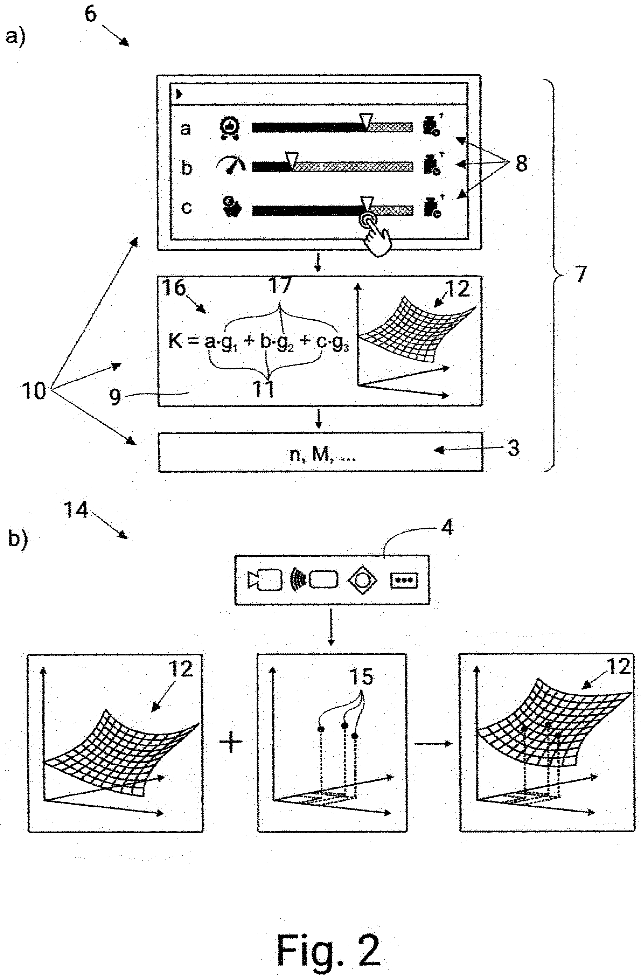

Das Fahrerassistenzsystem 2 ermittelt nun in einer Ermittlungsroutine 6 mittels einer parametrierbaren Strategie 7 optimierte Maschinenparameter 3 für die landwirtschaftliche Arbeitsmaschine 1 zur Durchführung der landwirtschaftlichen Arbeitsaufgabe. Dieser Vorgang ist abstrakt in Fig. 2 a) dargestellt und wird im Weiteren noch erläutert.

Die Strategie 7 umfasst Strategievorgaben 8, eine Anwendungsvorschrift 9 und die optimierten Maschinenparameter 3. Ganz allgemein ist die Strategie 7 durch Strategieparameter 10 zur Anpassung an einen lokalen Kontext parametrierbar, wie ebenfalls noch erläutert wird.

In der Ermittlungsroutine 6 verwendet das Fahrerassistenzsystem 2 die Strategievorgaben 8 als Eingangsparameter der Anwendungsvorschrift 9, um die optimierten Maschinenparameter 3 als Ausgangsparameter der Anwendungsvorschrift 9 zu ermitteln. Die optimierten Maschinenparameter 3 sind dabei hinsichtlich der Strategievorgaben 8 optimiert.

Um nun bei einer neuen landwirtschaftlichen Arbeitsaufgabe die optimierten Maschinenparameter 3 zu ermitteln, parametriert das Fahrerassistenzsystem 2 zu Beginn der Durchführung der landwirtschaftlichen Arbeitsaufgabe die Strategie 7 mit Initialstrategieparametern. Die Initialstrategieparameter können bei der Durchführung der landwirtschaftlichen Arbeitsaufgabe noch angepasst werden.

Strategievorgaben 8 können abstrakte Strategien 7 und/oder Gewichtungen von Qualitätskriterien umfassen. Die abstrakten Strategien 7 umfassen hier und vorzugsweise eine maschinenschonende Strategie 7 mit geringem Verschleiß der autonomen landwirtschaftlichen Arbeitsmaschine 1 und/oder einen Eco-Modus mit geringem Energieverbrauch aber längerer Arbeitszeit und/oder ein schnelles Abarbeiten mit höherem Treibstoffverbrauch, und/oder eine höhere Erntequalität mit höherem Zeitaufwand und/oder einen hohen Durchsatz mit geringerer Erntequalität. Die Qualitätskriterien umfassen vorzugsweise konkurrierende Qualitätskriterien, für die der Nutzer, wie in Fig. 2 beispielhaft für drei Qualitätskriterien dargestellt, eine Gewichtung grafisch einstellen kann. Die grafische Anzeige visualisiert dabei die Konkurrenz der Qualitätskriterien. Bei der Optimierung handelt es sich folglich um eine Mehrzieloptimierung. Hier und vorzugsweise werden die Strategievorgaben 8 vom Nutzer vorgegeben.

Der Definition des jeweiligen Qualitätskriteriums kommt vorliegend besondere Bedeutung zu. Hier und vorzugsweise ist jedes Qualitätskriterium ganz allgemein durch eine Zielvorgabe der Optimierung oder der Einstellung eines Arbeitsprozessparameters definiert. Der Begriff "Optimierung" kann im einfachsten Fall die Maximierung oder Minimierung des jeweiligen Arbeitsprozessparameters umfassen. Der Begriff "Einstellung" bedeutet, dass der jeweilige Arbeitsprozessparameter einen speziellen Wert einnehmen soll und das Fahrerassistenzsystem 2 die Maschinenparameter dahingehend optimiert, dass dieser Wert, nach Möglichkeit, eingenommen wird. Die Qualitätskriterien können vorzugsweise gewählt sein aus der Liste umfassend "Ausdrusch", "Bruchkornanteil", "Abscheideverluste", "Reinigungsverluste", "Schlupf Dreschwerk-Antrieb", "Kraftstoffverbrauch", "Durchsatz", "Sauberkeit" und "Strohqualität". Ein Arbeitsprozessparameter kann zum Beispiel eine Fahrgeschwindigkeit oder ein Erntedurchsatz sein. Die Arbeitsprozessparameter stellen sich durch das Zusammenwirken von Maschinenparametern mit den lokalen Gegebenheiten ein.

Wesentlich ist nun, dass das Fahrerassistenzsystem 2 als Initialstrategieparameter Strategieparameter 10 verwendet, die von mindestens einer landwirtschaftlichen Arbeitsmaschine 1 in einem ähnlichen lokalen Kontext bereits optimiert wurden. Die Initialstrategieparameter können dabei von einer landwirtschaftlichen Arbeitsmaschine 1 optimiert worden sein oder Strategieparameter 10 mehrerer landwirtschaftlicher Arbeitsmaschinen 1 können miteinander verknüpft werden.

Initialstrategieparameter sind Strategieparameter 10, die zu Beginn der Durchführung der landwirtschaftlichen Arbeitsaufgabe verwendet werden, um die Strategie 7 zu parametrisieren. In einer bevorzugten Ausgestaltung umfassen die Initialstrategieparameter Initial-Koeffizienten von Kennfeldern 12 der Anwendungsvorschrift 9, wie noch erläutert wird. Diese Initial-Koeffizienten werden verwendet, um initiale Kennfelder 12 zu parametrisieren. Die initialen Kennfelder 12 werden zu Beginn der Durchführung der landwirtschaftlichen Arbeitsaufgabe verwendet. Insgesamt betrifft der Begriff "initial" vorliegend also immer den Beginn einer landwirtschaftlichen Arbeitsaufgabe.

Statt dass die landwirtschaftliche Arbeitsmaschine 1 nun also mit einer Standardkonfiguration losfährt, nutzt sie Initialstrategieparameter, die eine höhere Chance haben, näher an und schneller zu einem Optimum der Maschinenparameter zu führen.

Die Strategieparameter 10 können Strategievorgaben 8, Koeffizienten 11 von Kennfeldern 12 und dergleichen umfassen. Zur Ermittlung der Ähnlichkeit kann ein Ähnlichkeitsmaß definiert werden oder es können, wie noch erläutert wird, Klimazonen herangezogen werden.

Die optimierten Maschinenparameter 3 werden vom Fahrerassistenzsystem 2 an der landwirtschaftlichen Arbeitsmaschine 1 eingestellt und zur Durchführung mindestens eines Teils der landwirtschaftlichen Arbeitsaufgabe verwendet.

Fig. 1 zeigt, dass hier und vorzugsweise eine Steueranordnung 5 zur Verteilung optimierter Initialstrategieparameter vorgesehen ist. Diese Steueranordnung 5 kann grundsätzlich Teil der landwirtschaftlichen Arbeitsmaschine 1, insbesondere des Fahrerassistenzsystems 2, sein. Hier und vorzugsweise ist sie jedoch extern dazu angeordnet.

Im Folgenden wird der bevorzugte Ablauf des Verfahrens unter Verwendung einer Steueranordnung 5 erläutert.

Die Steueranordnung 5 weist eine Datenbank 13 mit hinterlegten Strategieparametern 10 und zugeordneten Daten zu lokalen Kontexten auf. Die Datenbank 13 kann Teil der Steueranordnung 5 oder extern dazu angeordnet sein. Die hinterlegten Strategieparameter 10 wurden von Fahrerassistenzsystemen 2 landwirtschaftlicher Arbeitsmaschinen 1 in Optimierungsroutinen 14 bei der Durchführung landwirtschaftlicher Arbeitsaufgaben in lokalen Kontexten aus Initialstrategieparametern sukzessive zur Anpassung an den jeweiligen lokalen Kontext optimiert. Es kann sich dabei um historische und/oder tagesaktuelle Daten handeln, die prinzipiell aus der Nähe oder von der ganzen Welt stammen können.

Hier und vorzugsweise ermittelt das Fahrerassistenzsystem 2 Kontextdaten des lokalen Kontextes der landwirtschaftlichen Arbeitsaufgabe, insbesondere mittels der Sensoranordnung 4, und übermittelt diese an die Steueranordnung 5. Zusätzlich oder alternativ kann die Steueranordnung 5 die Kontextdaten auch selbst ermitteln, insbesondere aus GPS-Daten der landwirtschaftlichen Arbeitsmaschine 1. Das Ermitteln kann sich auch auf ein reines Auswählen beschränken. Hier und vorzugsweise werden jedoch Mittelwerte einer Vielzahl von Initialstrategieparametern aus ähnlichen Kontexten gebildet oder diese anderweitig verknüpft und als Initialstrategieparameter übermittelt. Bei der Mittelwertbildung können die Initialstrategieparametern aus ähnlichen Kontexten gewichtet werden, vorzugsweise abhängig von einer Vertrauenswürdigkeit der Daten und/oder einem Ähnlichkeitsindex. Zusätzlich oder alternativ können mehrere Initialstrategieparameter, die insbesondere weit auseinander liegen und somit potentiell lokale Maxima bilden, durchprobiert werden.

Die Steueranordnung 5 ermittelt basierend auf einem Abgleich der empfangenen Kontextdaten mit den Kontextdaten aus der Datenbank 13 an den lokalen Kontext angepasste Initialstrategieparameter und übermittelt diese an das Fahrerassistenzsystem 2 der landwirtschaftlichen Arbeitsmaschine 1.

Das Fahrerassistenzsystem 2 verwendet die übermittelten Initialstrategieparameter als Initialstrategieparameter.

Weiter ist hier und vorzugsweise vorgesehen, dass die landwirtschaftliche Arbeitsmaschine 1 während der Durchführung der landwirtschaftlichen Arbeitsaufgabe, insbesondere zu Beginn der Durchführung der landwirtschaftlichen Arbeitsaufgabe, in einer von dem Fahrerassistenzsystem 2 gesteuerten Optimierungsroutine 14 mittels der Sensoranordnung 4 die Erzielung der Strategievorgaben 8 betreffende Sensordaten ermittelt und dass das Fahrerassistenzsystem 2 in der Optimierungsroutine 14 die Initialstrategieparameter basierend auf den Sensordaten sukzessive optimiert und so die optimierten Maschinenparameter 3 weiter optimiert.

Auf diese Art und Weise werden die Initialstrategieparameter als Startpunkt der Optimierungsroutine 14 verwendet, wodurch zu Beginn der Optimierungsroutine 14 bessere Ergebnisse erzielt werden. Auch wird ermöglicht, dass die Optimierungsroutine 14 verkürzt werden kann.

Zusätzlich kann eine Übertragung von Initialstrategieparametern und deren Verwendung analog zur beschriebenen Verwendung in späteren Phasen der Durchführung der landwirtschaftlichen Arbeitsaufgabe vorgesehen sein. Insbesondere kann die landwirtschaftliche Arbeitsmaschine 1 ihre eigene Performance mit der Perfomance anderer landwirtschaftlicher Arbeitsmaschinen 1 vergleichen und abhängig von der Perfomance erneut Initialstrategieparameter einer anderen landwirtschaftlicher Arbeitsmaschine 1 verwenden. Anschließend kann optional erneut eine Optimierungsroutine 14 durchgeführt werden. Bei einem Sensorausfall, der die Durchführung einer Optimierungsroutine 14 erschwert oder verhindert, können regelmäßig, beispielsweise bei Änderungen des lokalen Kontextes, Initialstrategieparameter anderer landwirtschaftlicher Arbeitsmaschinen 1 verwendet werden.

Es kann vorgesehen sein, dass das Fahrerassistenzsystem 2 anschließend die so optimierten Strategieparameter 10 und die Kontextdaten an die Steueranordnung 5 überträgt.

Ebenfalls kann vorgesehen sein, dass der Benutzer mindestens einen, vorzugsweise mehrere, der Strategieparameter 10 nach und/oder während der Optimierungsroutine 14 verstellt, vorzugsweise, dass das Fahrerassistenzsystem 2 die so gemeinsam optimierten Strategieparameter 10 und die Kontextdaten an die Steueranordnung 5 überträgt.

Besonders interessant ist die Möglichkeit, die Optimierung durch das Fahrerassistenzsystem 2 dadurch zu ergänzen, dass auch erfasst wird, wie der Benutzer auf diese Optimierung reagiert. So können Fehler oder Unzulänglichkeiten in der Optimierungsroutine 14 aufgedeckt werden. Weiterhin werden diese gegebenenfalls automatisch dadurch korrigiert, dass die Steueranordnung 5 in Zukunft auch auf diese gemeinsam optimierten Daten zugreifen kann.

Der Benutzer stellt hier und vorzugsweise die Strategievorgaben 8 und/oder Optimierungskriterien ein. Grundsätzlich kann trotzdem auch vorgesehen sein, dass er tiefer in das System eingreift und sogar Maschinenparameter einzeln verstellt.

Die vorschlagsgemäße Lösung eignet sich in besonderer Weise in dem Fall, dass die Strategie 7 mindestens ein Kennfeld 12 umfasst, das Zusammenhänge zwischen den Maschinenparametern und den Strategievorgaben 8, insbesondere in Form mathematischer Funktionen, abbildet. Derartige Kennfelder 12 sind in den Figuren 1 und 2 abgebildet. Es ist schwer bis unmöglich, die Funktionsweise einer landwirtschaftlichen Arbeitsmaschine 1 in allen denkbaren Arbeitspunkten und unter Berücksichtigung aller Zusammenhänge mathematisch präzise abzubilden. Es ist jedoch möglich, einige Arbeitspunkte und Zusammenhänge zu modellieren und in gewissen Grenzen so gute Optimierungsergebnisse zu erzielen. Mittels noch zu erläuternder Stützstellen 15 kann ein Initialkennfeld an den lokalen Kontext angepasst werden. Hier und vorzugsweise sind mehrere Kennfelder 12 vorgesehen, die beispielsweise einzelne Arbeitsaggregate der landwirtschaftlichen Arbeitsmaschine 1 abbilden.

Mittels der Anwendungsvorschrift 9 ermittelt das Fahrerassistenzsystem 2 die optimierten Maschinenparameter 3 basierend auf den Strategievorgaben 8 aus dem Kennfeld 12 oder den Kennfeldern 12. Insbesondere liest das Fahrerassistenzsystem 2 die optimierten Maschinenparameter 3 schlicht aus den Kennfeldern 12 ab.

Das Kennfeld 12 oder die Kennfelder 12 weist oder weisen Koeffizienten 11 auf, die die mathematischen Funktionen parametrieren. Diese werden hier und vorzugsweise aus den Stützstellen 15 ermittelt oder korrigiert.

Alternativ zu einem oder mehreren Kennfeldern 12 kann auch eine tabellarische Abbildung von empirisch ermittelten Zusammenhängen vorgesehen sein, die die Kennfelder 12 ersetzt. Gerade in diesem Fall ist es vorteilhaft, wenn die tabellarische Abbildung an den Kontext angepasst ist. Die tabellarische Abbildung wird nicht zwingend in einer Optimierungsroutine 14 weiter optimiert.

In der in Fig. 2 gezeigten und insoweit bevorzugten Ausführungsform umfasst die Strategie 7 eine Kostenfunktion 16. Die Kostenfunktion 16 gewichtet die Strategievorgaben 8 mit Gewichten 17. In Fig. 2 ist eine derartige Kostenfunktion 16 rein exemplarisch und vereinfacht abgebildet. Die Gewichte können den weiter oben angesprochenen Gewichtungen der Qualitätskriterien entsprechen oder aus diesen abgeleitet werden, jedoch auch davon mehr oder weniger unabhängig sein.

Mittels der Anwendungsvorschrift 9 ermittelt das Fahrerassistenzsystem 2 die optimierten Maschinenparameter 3 derart aus dem Kennfeld 12 oder den Kennfeldern 12, dass die Kostenfunktion 16 ein vordefiniertes Ziel anstrebt, insbesondere das Ziel, Kosten der Kostenfunktion 16 zu minimieren.

Die Gewichte 17 sind so gewählt, dass minimale Kosten der Kostenfunktion 16 eine Maximierung der Erreichung der Strategievorgaben 8 erzielen.

Weiter ist hier und vorzugsweise vorgesehen, dass das Fahrerassistenzsystem 2 in der Optimierungsroutine 14 verschiedene Maschinenparameter einstellt, die Stützstellen 15 des Kennfelds 12 oder der Kennfelder 12 bilden und aus den Stützstellen 15 die Koeffizienten 11 und/oder mindestens eine Verschiebung eines Kennfelds 12 ermittelt.

Zu Beginn einer landwirtschaftlichen Arbeitsaufgabe weiß das Fahrerassistenzsystem 2 wenig über die lokalen physikalischen Einflüsse. Hier und vorzugsweise stellt das Fahrerassistenzsystem 2 daher einige Maschinenparameter auf nicht-optimale Werte ein, um den Effekt zu messen. Diese Einstellungen bilden die Stützstellen 15, aus denen dann das Kennfeld 12 oder die Kennfelder 12 ermittelt werden. Dieser Vorgang kann eine Zeit dauern, weshalb die verbesserten Initialstrategievorgaben 8 einen wesentlichen Effekt auf das Arbeitsergebnis, insbesondere während dieser Anfangszeit, haben.

Hier und vorzugsweise kann die Dauer der Optimierungsroutine 14 verkürzt werden, insbesondere indem die Anzahl der Stützstellen 15 reduziert wird. Dafür kann vorgesehen sein, dass wenigstens ein, vorzugsweise mehrere, Koeffizienten 11 des initial aus den Strategievorgaben 8 abgeleiteten Kennfelds 12 oder der Kennfelder 12 nicht mehr verändert werden, sondern das Kennfeld 12 insbesondere nur verschoben wird.

Im Einzelnen kann vorgesehen sein, dass die Optimierungsroutine 14 abhängig von den Initialstrategieparametern ist, vorzugsweise, dass das Fahrerassistenzsystem 2 die Stützstellen 15 abhängig von den Initialstrategieparametern wählt, und/oder, dass die Optimierungsroutine 14 abhängig von den Initialstrategieparametern gegenüber einer Optimierungsroutine 14 basierend auf nicht kontextabhängigen Initialstrategieparametern verkürzt wird.

Beispielsweise kann ein Kennfeld 12 verkleinert werden, da die Wahrscheinlichkeit größerer Abweichungen des initialen Arbeitspunktes, also der initialen optimierten Maschinenparameter 3, vom theoretischen Optimum mit hoher Wahrscheinlichkeit geringer ausfällt.

Ebenfalls denkbar ist, dass in der Optimierungsroutine 14 aus mehreren vordefinierten Kennfeldern 12 anhand der Stützstellen 15 ein passendes Kennfeld 12 oder passende Kennfelder 12 ausgewählt wird oder werden.

In einer Variante ist vorgesehen, dass die Initialstrategieparameter optimierte Maschinenparameter 3 umfassen.

Vorzugsweise ist es dabei so, dass das Fahrerassistenzsystem 2 die optimierten Maschinenparameter 3 der Initialstrategieparameter initial als optimierte Maschinenparameter 3 an der landwirtschaftlichen Arbeitsmaschine 1 einstellt und erst im Laufe der oder im Anschluss an die Optimierungsroutine 14 die in der Ermittlungsroutine 6 optimierten Maschinenparameter 3 an der landwirtschaftlichen Arbeitsmaschine 1 einstellt.

Somit startet die landwirtschaftliche Arbeitsmaschine 1 direkt mit passenden Maschinenparametern, nimmt zum Beispiel erstmal Messdaten zu diesem Arbeitspunkt auf und variiert dann sukzessive die Maschinenparameter zur Ermittlung weiterer Stützstellen 15.

Alternativ werden auch initial und/oder im Wesentlichen während der gesamten Durchführung der landwirtschaftlichen Arbeitsaufgabe die aus der Anwendungsvorschrift 9 ermittelten Maschinenparameter als optimierte Maschinenparameter 3 eingestellt.

Weiter ist hier und vorzugsweise vorgesehen, dass die Initialstrategieparameter Strategievorgaben 8 und/oder Initialstrategieparameter der Anwendungsvorschrift 9 umfassen, vorzugsweise, dass die Initialstrategieparameter der Anwendungsvorschrift 9 Gewichte 17 der Kostenfunktion 16 und/oder Koeffizienten 11 der Kennfelder 12 umfassen.

Alternativ können die Initialstrategieparameter andere Kostenfunktion 16 oder andere Kennfelder 12 in Form anderer mathematischer Funktionen der Kennfelder 12 umfassen.

Vorzugsweise umfassen die Strategievorgaben 8 nicht nur optimierte Maschinenparameter 3 und/oder nicht nur Strategievorgaben 8. Auch wenn optimierte Maschinenparameter 3 übertragen werden, ermittelt das Fahrerassistenzsystem 2 im Laufe der Durchführung der landwirtschaftlichen Arbeitsaufgabe optimierte Maschinenparameter 3 und stellt diese ein.

Weiter ist hier und vorzugsweise vorgesehen, dass die Strategievorgaben 8 vom Benutzer, insbesondere an einem Terminal der landwirtschaftlichen Arbeitsmaschine 1, ausgewählt werden. Diesen Vorgang visualisiert Fig. 2 a) anhand von konkurrierenden Strategievorgaben 8.

Hier und vorzugsweise ist das Fahrerassistenzsystem 2 allgemein so ausgestaltet, dass dieselben Strategievorgaben 8 abhängig von den Strategieparametern 10 zu unterschiedlichen optimierten Maschinenparametern 3 führen. Wobei vorzugsweise dieselben Strategievorgaben 8 abhängig von den Initialstrategieparametern, insbesondere Gewichten 17 der Kostenfunktion 16, auch bei theoretisch identischen Kennfeldern 12 zu unterschiedlichen optimierten Maschinenparametern 3 führen. Dabei muss nicht vorgesehen sein, dass diese Varianten tatsächlich durchgeführt werden, es handelt sich vielmehr um Beschreibungen der Funktionsweise.

Wie bereits erwähnt, ist vorzugsweise vorgesehen, dass die Steueranordnung 5 extern zu der landwirtschaftlichen Arbeitsmaschine 1 angeordnet ist. Die Steueranordnung 5 kann von einem oder mehreren Servern gebildet werden und über das Internet mit der landwirtschaftlichen Arbeitsmaschine 1 kommunizieren. Zusätzlich oder alternativ können in der Datenbank 13 eine Vielzahl von Strategieparametern 10 hinterlegt sein, die von anderen, insbesondere gleichartigen, landwirtschaftlichen Arbeitsmaschinen 1 stammen.

Die Steueranordnung 5 kann auch auf der landwirtschaftlichen Arbeitsmaschine 1 angeordnet sein oder auf die landwirtschaftliche Arbeitsmaschine 1 und einen externen Teil aufgeteilt sein. Im letzten Fall können insbesondere langfristige Strategieparameter 10, insbesondere klimaabhängige Strategieparameter 10, lokal und kurzfristige Strategieparameter 10 extern gespeichert sein. Im Falle eines Verbindungsabbruchs können die lokalen Strategieparameter 10 verwendet werden.

Gleichartige landwirtschaftliche Arbeitsmaschinen 1 sind solche, die grundsätzlich extrem ähnliches Verhalten aufweisen, also insbesondere landwirtschaftliche Arbeitsmaschinen 1 des gleichen Typs mit gleicher Ausstattung.

Im Folgenden werden nun Quellen erläutert, aus denen die Initialstrategievorgaben 8 stammen können, ob sie nun über die Steueranordnung 5 übertragen werden oder nicht. Die Initialstrategieparameter können von derselben landwirtschaftlichen Arbeitsmaschine 1 in demselben oder einem ähnlichen lokalen Kontext optimiert worden sein. Insbesondere ist es der Fall, dass die Initialstrategieparameter innerhalb von höchstens 14 Tagen vor dem aktuellen Tag von derselben landwirtschaftlichen Arbeitsmaschine 1 optimiert wurden, oder, dass die Initialstrategieparameter in einer vergangenen Jahreszeit, insbesondere der gleichen Jahreszeit, optimiert wurden. Es kann also vorgesehen sein, dass ein und dieselbe landwirtschaftliche Arbeitsmaschine 1 ihre eigenen Optimierungsergebnisse zukünftig als Initialstrategievorgaben 8 verwendet. Alternativ zur Jahreszeit können auch vergleichbare Perioden eines Erntezyklus oder Erntejahres verwendet werden, insbesondere, wenn die Aufteilung von Aussaat, Ernte, usw. zwischen den verschiedenen Orten variiert.

Die weiter genannten Varianten können bei unterschiedlichen landwirtschaftlichen Arbeitsaufgaben bei derselben landwirtschaftlichen Arbeitsmaschine 1 vorkommen, insbesondere abhängig davon, welche Initialstrategieparameter verfügbar sind und/oder wie ähnlich die lokalen Kontexte sind oder die Initialstrategievorgaben 8 zwischen landwirtschaftlichen Arbeitsmaschinen 1, gegebenenfalls indirekt über die Steueranordnung 5, übertragen werden.

Hier und vorzugsweise ist vorgesehen, dass der aktuelle lokale Kontext und der lokale Kontext der verwendeten, insbesondere von der Steueranordnung 5 übertragenen, Initialstrategieparameter dasselbe Feld oder ein nahes Feld ist, vorzugsweise, dass die Initialstrategieparameter von einer anderen landwirtschaftlichen Arbeitsmaschine 1 optimiert wurden.

Dieser Fall ist besonders dann interessant, wenn eine landwirtschaftliche Arbeitsmaschine 1 später auf ein Feld fährt oder keine Optimierungsroutine 14 durchführen kann.

Weiter ist hier und vorzugsweise vorgesehen, dass die Ähnlichkeit der lokalen Kontexte über ein Ähnlichkeitsmaß, insbesondere von der Steueranordnung 5, ermittelt wird, vorzugsweise, dass das Ähnlichkeitsmaß Klimazonen der jeweiligen lokalen Kontexte berücksichtigt, insbesondere primär berücksichtigt.

Es wurde erkannt, dass Klimazonen einen erheblichen Einfluss auf die Funktion landwirtschaftlicher Arbeitsmaschinen 1 haben. Dieser Einfluss kann durch Unterschiede im Boden, im Feldbestand, aber auch in dem Verhalten der landwirtschaftlichen Arbeitsmaschine 1 bei unterschiedlichen Umwelteinflüssen begründet sein. Es wurde ebenfalls herausgefunden, dass manuelle Bediener in unterschiedlichen Klimazonen unterschiedliche Maschinenparametereinstellungen wählen.

Der Begriff "primär" bedeutet hier, dass nur Initialstrategievorgaben 8 bei denen die Kontextdaten die gleiche Klimazone betreffen, infrage kommen.

Hier und vorzugsweise werden also Initialstrategieparameter von landwirtschaftlichen Arbeitsmaschinen 1 in gleichen Klimazonen verwendet, vorzugsweise von solchen, die gerade eine landwirtschaftliche Arbeitsaufgabe durchführen oder dies innerhalb der letzten 24h getan haben. Dabei können einzelne Initialstrategieparameter oder verknüpfte Initialstrategieparameter, insbesondere gemittelte, Initialstrategieparameter verwendet werden.

Weiter ist hier und vorzugsweise vorgesehen, dass die Klimazonen nach der Köppen-Geiger-Klassifikation in ähnliche Klimazonen unterteilt sind.

Besonders bevorzugt ist, dass die landwirtschaftliche Arbeitsmaschine 1 ein Mähdrescher ist, vorzugsweise, dass die optimierten Maschinenparameter 3 die Dreschtrommeldrehzahl und/oder die Spaltweite der Dreschtrommel.

Vorgeschlagen wird gemäß einer weiteren Lehre eine landwirtschaftliche Arbeitsmaschine 1 eingerichtet zur optimierten Ermittlung von Maschinenparametern der landwirtschaftlichen Arbeitsmaschine 1, wobei die landwirtschaftliche Arbeitsmaschine 1 ein Fahrerassistenzsystem 2 und eine Sensoranordnung 4 aufweist, wobei die landwirtschaftliche Arbeitsmaschine 1 eingerichtet ist, eine landwirtschaftliche Arbeitsaufgabe in einem lokalen Kontext durchzuführen, wobei das Fahrerassistenzsystem 2 eingerichtet ist, in einer Ermittlungsroutine 6 mittels einer parametrierbaren Strategie 7 optimierte Maschinenparameter 3 für die landwirtschaftliche Arbeitsmaschine 1 zur Durchführung der landwirtschaftlichen Arbeitsaufgabe zu ermitteln, wobei die Strategie 7 Strategievorgaben 8, eine Anwendungsvorschrift 9 und die optimierten Maschinenparameter 3 umfasst, und wobei die Strategie 7 durch Strategieparameter 10 zur Anpassung an einen lokalen Kontext parametrierbar ist, wobei das Fahrerassistenzsystem 2 eingerichtet ist, in der Ermittlungsroutine 6 die Strategievorgaben 8 als Eingangsparameter der Anwendungsvorschrift 9 zu verwenden, um die optimierten Maschinenparameter 3 hinsichtlich der Strategievorgaben 8 optimiert als Ausgangsparameter der Anwendungsvorschrift 9 zu ermitteln und wobei das Fahrerassistenzsystem 2 eingerichtet ist, zu Beginn der Durchführung der landwirtschaftlichen Arbeitsaufgabe die Strategie 7 mit Initialstrategieparametern zu parametrieren, um die optimierten Maschinenparameter 3 zu ermitteln.

Wesentlich nach dieser weiteren Lehre ist, dass das Fahrerassistenzsystem 2 eingerichtet ist, als Initialstrategieparameter Strategieparameter 10 zu verwenden, die von mindestens einer landwirtschaftlichen Arbeitsmaschine 1 in einem ähnlichen lokalen Kontext bereits optimiert wurden.

Diese landwirtschaftliche Arbeitsmaschine 1 wird hier und vorzugsweise in dem vorschlagsgemäßen Verfahren verwendet und ist daher insbesondere eingerichtet zur Verwendung in dem vorschlagsgemäßen Verfahren.

Auf alle Ausführungen zu dem vorschlagsgemäßen Verfahren darf verwiesen werden.

### Bezugszeichenliste

- 1: landwirtschaftliche Arbeitsmaschine
- 2: Fahrerassistenzsystem
- 3: optimierte Maschinenparameter
- 4: Sensoranordnung
- 5: Steueranordnung
- 6: Ermittlungsroutine
- 7: Strategie
- 8: Strategievorgaben
- 9: Anwendungsvorschrift
- 10: Strategieparameter
- 11: Koeffizienten
- 12: Kennfeld
- 13: Datenbank
- 14: Optimierungsroutine
- 15: Stützstellen
- 16: Kostenfunktion
- 17: Gewichte

## Patentansprüche

1. Verfahren zur optimierten Ermittlung von Maschinenparametern einer landwirtschaftlichen Arbeitsmaschine (1), wobei die landwirtschaftliche Arbeitsmaschine (1) ein Fahrerassistenzsystem (2) und eine Sensoranordnung (4) aufweist, wobei die landwirtschaftliche Arbeitsmaschine (1) eine landwirtschaftliche Arbeitsaufgabe in einem lokalen Kontext durchführt,
wobei das Fahrerassistenzsystem (2) in einer Ermittlungsroutine (6) mittels einer parametrierbaren Strategie (7) optimierte Maschinenparameter (3) für die landwirtschaftliche Arbeitsmaschine (1) zur Durchführung der landwirtschaftlichen Arbeitsaufgabe ermittelt, wobei die Strategie (7) Strategievorgaben (8), eine Anwendungsvorschrift (9) und die optimierten Maschinenparameter (3) umfasst, und wobei die Strategie (7) durch Strategieparameter (10) zur Anpassung an einen lokalen Kontext parametrierbar ist,
wobei das Fahrerassistenzsystem (2) in der Ermittlungsroutine (6) die Strategievorgaben (8) als Eingangsparameter der Anwendungsvorschrift (9) verwendet, um die optimierten Maschinenparameter (3) hinsichtlich der Strategievorgaben (8) optimiert als Ausgangsparameter der Anwendungsvorschrift (9) zu ermitteln und
wobei das Fahrerassistenzsystem (2) zu Beginn der Durchführung der landwirtschaftlichen Arbeitsaufgabe die Strategie (7) mit Initialstrategieparametern parametriert, um die optimierten Maschinenparameter (3) zu ermitteln,
**dadurch gekennzeichnet,**
**dass** das Fahrerassistenzsystem (2) als Initialstrategieparameter Strategieparameter (10) verwendet, die von mindestens einer landwirtschaftlichen Arbeitsmaschine (1) in einem ähnlichen lokalen Kontext bereits optimiert wurden.

2. Verfahren nach Anspruch 1, **dadurch gekennzeichnet, dass** eine Steueranordnung (5) zur Verteilung optimierter Initialstrategieparameter vorgesehen ist, dass die Steueranordnung (5) eine Datenbank (13) mit hinterlegten Strategieparametern (10) und zugeordneten Daten zu lokalen Kontexten aufweist, dass die hinterlegten Strategieparameter (10) von Fahrerassistenzsystemen (2) landwirtschaftlicher Arbeitsmaschinen (1) in Optimierungsroutinen (14) bei der Durchführung landwirtschaftlicher Arbeitsaufgaben in lokalen Kontexten aus Initialstrategieparametern sukzessive zur Anpassung an den jeweiligen lokalen Kontext optimiert wurden,
dass das Fahrerassistenzsystem (2) Kontextdaten des lokalen Kontextes der landwirtschaftlichen Arbeitsaufgabe, insbesondere mittels der Sensoranordnung (4), ermittelt und an die Steueranordnung (5) übermittelt, dass die Steueranordnung (5) basierend auf einem Abgleich der empfangenen Kontextdaten mit den Kontextdaten aus der Datenbank (13) an den lokalen Kontext angepasste Initialstrategieparameter ermittelt und an das Fahrerassistenzsystem (2) der landwirtschaftlichen Arbeitsmaschine (1) übermittelt und dass das Fahrerassistenzsystem (2) die übermittelten Initialstrategieparameter als Initialstrategieparameter verwendet.

3. Verfahren nach Anspruch 1 oder 2, **dadurch gekennzeichnet, dass** die landwirtschaftliche Arbeitsmaschine (1) während der Durchführung der landwirtschaftlichen Arbeitsaufgabe, insbesondere zu Beginn der Durchführung der landwirtschaftlichen Arbeitsaufgabe, in einer von dem Fahrerassistenzsystem (2) gesteuerten Optimierungsroutine (14) mittels der Sensoranordnung (4) die Erzielung der Strategievorgaben (8) betreffende Sensordaten ermittelt und dass das Fahrerassistenzsystem (2) in der Optimierungsroutine (14) die Initialstrategieparameter basierend auf den Sensordaten sukzessive optimiert und so die optimierten Maschinenparameter (3) weiter optimiert, vorzugsweise, dass das Fahrerassistenzsystem (2) die so optimierten Strategieparameter (10) und die Kontextdaten an die Steueranordnung (5) überträgt.

4. Verfahren nach Anspruch 3, **dadurch gekennzeichnet, dass** der Benutzer mindestens einen, vorzugsweise mehrere, der Strategieparameter (10) nach und/oder während der Optimierungsroutine (14) verstellt, vorzugsweise, dass das Fahrerassistenzsystem (2) die so gemeinsam optimierten Strategieparameter (10) und die Kontextdaten an die Steueranordnung (5) überträgt.

5. Verfahren nach einem der vorhergehenden Ansprüche, **dadurch gekennzeichnet, dass** die Strategie (7) mindestens ein Kennfeld (12) umfasst, das Zusammenhänge zwischen den Maschinenparametern und den Strategievorgaben (8), insbesondere in Form mathematischer Funktionen, abbildet, dass mittels der Anwendungsvorschrift (9) das Fahrerassistenzsystem (2) die optimierten Maschinenparameter (3) basierend auf den Strategievorgaben (8) aus dem Kennfeld (12) oder den Kennfeldern (12) ermittelt, insbesondere abliest, vorzugsweise, dass das Kennfeld (12) Koeffizienten (11) aufweist, die die mathematischen Funktionen parametrieren.

6. Verfahren nach Anspruch 5, **dadurch gekennzeichnet, dass** die Strategie (7) eine Kostenfunktion (16) umfasst, dass die Kostenfunktion (16) die Strategievorgaben (8) gewichtet, dass mittels der Anwendungsvorschrift (9) das Fahrerassistenzsystem (2) die optimierten Maschinenparameter (3) derart aus dem Kennfeld (12) oder den Kennfeldern (12) ermittelt, dass die Kostenfunktion (16) ein vordefiniertes Ziel anstrebt, insbesondere das Ziel, Kosten der Kostenfunktion (16) zu minimieren.

7. Verfahren nach einem der Ansprüche 3 bis 6, **dadurch gekennzeichnet, dass** das Fahrerassistenzsystem (2) in der Optimierungsroutine (14) verschiedene Maschinenparameter einstellt, die Stützpunkte des Kennfelds (12) oder der Kennfelder (12) bilden und aus den Stützpunkten die Koeffizienten (11) und/oder mindestens eine Verschiebung eines Kennfelds (12) ermittelt.

8. Verfahren nach einem der Ansprüche 3 bis 7, **dadurch gekennzeichnet, dass** die Optimierungsroutine (14) abhängig von den Initialstrategieparametern ist, vorzugsweise, dass das Fahrerassistenzsystem (2) die Stützstellen (15) abhängig von den Initialstrategieparametern wählt, und/oder, dass die Optimierungsroutine (14) abhängig von den Initialstrategieparametern gegenüber einer Optimierungsroutine (14) basierend auf nicht kontextabhängigen Initialstrategieparametern verkürzt wird.

9. Verfahren nach einem der vorhergehenden Ansprüche, **dadurch gekennzeichnet, dass** die Initialstrategieparameter optimierte Maschinenparameter (3) umfassen, vorzugsweise, dass das Fahrerassistenzsystem (2) die optimierten Maschinenparameter (3) der Initialstrategieparameter initial als optimierte Maschinenparameter (3) an der landwirtschaftlichen Arbeitsmaschine (1) einstellt und erst im Laufe der oder im Anschluss an die Optimierungsroutine (14) die in der Ermittlungsroutine (6) optimierten Maschinenparameter (3) an der landwirtschaftlichen Arbeitsmaschine (1) einstellt.

10. Verfahren nach einem der vorhergehenden Ansprüche, **dadurch gekennzeichnet, dass** die Initialstrategieparameter Strategievorgaben (8) und/oder Initialstrategieparameter der Anwendungsvorschrift (9) umfassen, vorzugsweise, dass die Initialstrategieparameter der Anwendungsvorschrift (9) Gewichte (17) der Kostenfunktion (16) und/oder Koeffizienten (11) der Kennfelder (12) umfassen.

11. Verfahren nach einem der vorhergehenden Ansprüche, **dadurch gekennzeichnet, dass** die Strategievorgaben (8) vom Benutzer, insbesondere an einem Terminal der landwirtschaftlichen Arbeitsmaschine (1), ausgewählt werden.

12. Verfahren nach einem der vorhergehenden Ansprüche, **dadurch gekennzeichnet, dass** dieselben Strategievorgaben (8) abhängig von den Strategieparametern (10) zu unterschiedlichen optimierten Maschinenparametern (3) führen, vorzugsweise, dass dieselben Strategievorgaben (8) abhängig von den Initialstrategieparametern, insbesondere Gewichten (17) der Kostenfunktion (16), auch bei theoretisch identischen Kennfeldern (12) zu unterschiedlichen optimierten Maschinenparametern (3) führen.

13. Verfahren nach Anspruch einem der Ansprüche 2 bis 12, **dadurch gekennzeichnet, dass** die Steueranordnung (5) extern zu der landwirtschaftlichen Arbeitsmaschine (1) angeordnet ist, insbesondere, dass die Steueranordnung (5) von einem oder mehreren Servern gebildet wird und über das Internet mit der landwirtschaftlichen Arbeitsmaschine (1) kommuniziert, und/oder, dass in der Datenbank (13) eine Vielzahl von Strategieparameter (10) hinterlegt ist, die von anderen, insbesondere gleichartigen, landwirtschaftlichen Arbeitsmaschinen (1) stammen.

14. Verfahren nach einem der vorhergehenden Ansprüche, **dadurch gekennzeichnet, dass** die Initialstrategieparameter von derselben landwirtschaftlichen Arbeitsmaschine (1) in demselben oder einem ähnlichen lokalen Kontext optimiert wurden, vorzugsweise, dass die Initialstrategieparameter innerhalb von höchstens 14 Tagen vor dem aktuellen Tag von derselben landwirtschaftlichen Arbeitsmaschine (1) optimiert wurden, oder, dass die Initialstrategieparameter in einer vergangenen Jahreszeit, insbesondere der gleichen Jahreszeit, optimiert wurden.

15. Verfahren nach einem der vorhergehenden Ansprüche, **dadurch gekennzeichnet, dass** der aktuelle lokale Kontext und der lokale Kontext der verwendeten, insbesondere von der Steueranordnung (5) übertragenen, Initialstrategieparameter dasselbe Feld oder ein nahes Feld ist, vorzugsweise, dass die Initialstrategieparameter von einer anderen landwirtschaftlichen Arbeitsmaschine (1) optimiert wurden.

16. Verfahren nach einem der vorhergehenden Ansprüche, **dadurch gekennzeichnet, dass** die Ähnlichkeit der lokalen Kontexte über ein Ähnlichkeitsmaß, insbesondere von der Steueranordnung (5), ermittelt wird, vorzugsweise, dass das Ähnlichkeitsmaß Klimazonen der jeweiligen lokalen Kontexte berücksichtigt, insbesondere primär berücksichtigt.

17. Verfahren nach Anspruch 16, **dadurch gekennzeichnet, dass** die Klimazonen nach der Köppen-Geiger-Klassifikation in ähnliche Klimazonen unterteilt sind.

18. Verfahren nach einem der vorhergehenden Ansprüche, **dadurch gekennzeichnet, dass** die landwirtschaftliche Arbeitsmaschine (1) ein Mähdrescher ist, vorzugsweise, dass die optimierten Maschinenparameter (3) die Dreschtrommeldrehzahl und/oder die Spaltweite der Dreschtrommel

19. Landwirtschaftliche Arbeitsmaschine eingerichtet zur optimierten Ermittlung von Maschinenparametern der landwirtschaftlichen Arbeitsmaschine (1), wobei die landwirtschaftliche Arbeitsmaschine (1) ein Fahrerassistenzsystem (2) und eine Sensoranordnung (4) aufweist, wobei die landwirtschaftliche Arbeitsmaschine (1) eingerichtet ist, eine landwirtschaftliche Arbeitsaufgabe in einem lokalen Kontext durchzuführen, wobei der lokale Kontext von Einflussgrößen gebildet wird, die am Ort der Durchführung der landwirtschaftlichen Arbeitsaufgabe vorhanden sind und die Einfluss auf das Ergebnis der landwirtschaftlichen Arbeitsaufgabe nehmen und der landwirtschaftlichen Arbeitsmaschine bekannt sind,
wobei das Fahrerassistenzsystem (2) eingerichtet ist, in einer Ermittlungsroutine (6) mittels einer parametrierbaren Strategie (7) optimierte Maschinenparameter (3) für die landwirtschaftliche Arbeitsmaschine (1) zur Durchführung der landwirtschaftlichen Arbeitsaufgabe zu ermitteln, wobei die Strategie (7) Strategievorgaben (8), eine Anwendungsvorschrift (9) und die optimierten Maschinenparameter (3) umfasst, und wobei die Strategie (7) durch Strategieparameter (10) zur Anpassung an einen lokalen Kontext parametrierbar ist,
wobei das Fahrerassistenzsystem (2) eingerichtet ist, in der Ermittlungsroutine (6) die Strategievorgaben (8) als Eingangsparameter der Anwendungsvorschrift (9) zu verwenden, um die optimierten Maschinenparameter (3) hinsichtlich der Strategievorgaben (8) optimiert als Ausgangsparameter der Anwendungsvorschrift (9) zu ermitteln und
wobei das Fahrerassistenzsystem (2) eingerichtet ist, zu Beginn der Durchführung der landwirtschaftlichen Arbeitsaufgabe die Strategie (7) mit Initialstrategieparametern zu parametrieren, um die optimierten Maschinenparameter (3) zu ermitteln,
**dadurch gekennzeichnet,**
**dass** das Fahrerassistenzsystem (2) eingerichtet ist, als Initialstrategieparameter Strategieparameter (10) zu verwenden, die von mindestens einer landwirtschaftlichen Arbeitsmaschine (1) in einem ähnlichen lokalen Kontext bereits optimiert wurden.

## Claims

1. Method for the optimized determination of machine parameters of an agricultural working machine (1), wherein the agricultural working machine (1) has a driver assistance system (2) and a sensor assembly (4), wherein the agricultural working machine (1) performs an agricultural task in a local context,
wherein the driver assistance system (2) determines in a determination routine (6) machine parameters (3) optimized by means of a parameterizable strategy (7) for the agricultural working machine (1) to perform the agricultural task, wherein the strategy (7) comprises strategy specifications (8), an instruction for use (9) and the optimized machine parameters (3), and wherein the strategy (7) can be parameterized by strategy parameters (10) for adapting to a local context,
wherein the driver assistance system (2) uses the strategy specifications (8) in the determination routine (6) as input parameters of the instruction for use (9) in order to determine the optimized machine parameters (3), optimized with respect to the strategy specifications (8), as output parameters of the instruction for use (9) and
wherein the driver assistance system (2) parameterizes the strategy (7) with initial strategy parameters at the beginning of performing the agricultural task in order to determine the optimized machine parameters (3),
**characterized**
**in that** the driver assistance system (2) uses as initial strategy parameters strategy parameters (10) which have already been optimized by at least one agricultural working machine (1) in a similar local context.

2. Method according to Claim 1, **characterized in that** a control assembly (5) for allocating optimized initial strategy parameters is provided, **in that** the control assembly (5) has a database (13) with stored strategy parameters (10) and associated data on local contexts, **in that** the stored strategy parameters (10) have been successively optimized by driver assistance systems (2) of agricultural working machines (1) in optimization routines (14) during the performance of agricultural tasks in local contexts from initial strategy parameters for adaptation to the respective local context,
**in that** the driver assistance system (2) determines context data of the local context of the agricultural task, in particular by means of the sensor assembly (4), and transmits them to the control assembly (5), **in that**, on the basis of a comparison of the received context data with the context data from the database (13), the control assembly (5) determines initial strategy parameters adapted to the local context and transmits them to the driver assistance system (2) of the agricultural working machine (1) and **in that** the driver assistance system (2) uses the transmitted initial strategy parameters as initial strategy parameters.

3. Method according to Claim 1 or 2, **characterized in that**, during the performance of the agricultural task, in particular at the beginning of the performance of the agricultural task, the agricultural working machine (1) determines in an optimization routine (14), controlled by the driver assistance system (2), by means of the sensor assembly (4) sensor data relating to the achievement of the strategy specifications (8) and **in that**, on the basis of the sensor data, the driver assistance system (2) successively optimizes the initial strategy parameters in the optimization routine (14) and thus further optimizes the optimized machine parameters (3), preferably **in that** the driver assistance system (2) transmits the thus optimized strategy parameters (10) and the context data to the control assembly (5).

4. Method according to Claim 3, **characterized in that** the user adjusts at least one, preferably more than one, of the strategy parameters (10) after and/or during the optimization routine (14), preferably **in that** the driver assistance system (2) transmits the thus jointly optimized strategy parameters (10) and the context data to the control assembly (5).

5. Method according to one of the preceding claims, **characterized in that** the strategy (7) comprises at least one characteristic map (12) which depicts relationships between the machine parameters and the strategy specifications (8), in particular in the form of mathematical functions, **in that**, by means of the instruction for use (9), the driver assistance system (2) determines, in particular reads off, the optimized machine parameters (3) on the basis of the strategy specifications (8) from the characteristic map (12) or the characteristic maps (12), preferably **in that** the characteristic map (12) has coefficients (11) which parameterize the mathematical functions.

6. Method according to Claim 5, **characterized in that** the strategy (7) comprises a cost function (16), **in that** the cost function (16) weights the strategy specifications (8), **in that**, by means of the instruction for use (9), the driver assistance system (2) determines the optimized machine parameters (3) from the characteristic map (12) or the characteristic maps (12) in such a way that the cost function (16) aims for a predefined target, in particular the target of minimizing costs of the cost function (16).

7. Method according to one of Claims 3 to 6, **characterized in that**, in the optimization routine (14), the driver assistance system (2) sets various machine parameters which form interpolation points of the characteristic map (12) or the characteristic maps (12) and determines from the interpolation points the coefficients (11) and/or at least one shift of a characteristic map (12).

8. Method according to one of Claims 3 to 7, **characterized in that** the optimization routine (14) is dependent on the initial strategy parameters, preferably in that the driver assistance system (2) chooses the interpolation points (15) depending on the initial strategy parameters, and/or **in that**, depending on the initial strategy parameters, the optimization routine (14) is shortened compared to an optimization routine (14) on the basis of non-context-dependent initial strategy parameters.

9. Method according to one of the preceding claims, **characterized in that** the initial strategy parameters comprise optimized machine parameters (3), preferably **in that** the driver assistance system (2) initially sets the optimized machine parameters (3) of the initial strategy parameters as optimized machine parameters (3) on the agricultural working machine (1) and only in the course of or at the end of the optimization routine (14) sets the machine parameters (3) optimized in the determination routine (6) on the agricultural working machine (1).

10. Method according to one of the preceding claims, **characterized in that** the initial strategy parameters comprise strategy specifications (8) and/or initial strategy parameters of the instruction for use (9), preferably **in that** the initial strategy parameters of the instruction for use (9) comprise weights (17) of the cost function (16) and/or coefficients (11) of the characteristic maps (12).

11. Method according to one of the preceding claims, **characterized in that** the strategy specifications (8) are selected by the user, in particular at a terminal of the agricultural working machine (1).

12. Method according to one of the preceding claims, **characterized in that**, depending on the strategy parameters (10), the same strategy specifications (8) lead to different optimized machine parameters (3), preferably **in that**, depending on the initial strategy parameters, in particular weights (17) of the cost function (16), the same strategy specifications (8) lead to different optimized machine parameters (3) even when there are theoretically identical characteristic maps (12).

13. Method according to Claim one of Claims 2 to 12, **characterized in that** the control assembly (5) is located externally to the agricultural working machine (1), in particular **in that** the control assembly (5) is formed by one or more servers and communicates with the agricultural working machine (1) via the Internet, and/or in that a multiplicity of strategy parameters (10) originating from other, in particular identical, agricultural working machines (1) are stored in the database (13).

14. Method according to one of the preceding claims, **characterized in that** the initial strategy parameters have been optimized by the same agricultural working machine (1) in the same or a similar local context, preferably **in that** the initial strategy parameters have been optimized by the same agricultural working machine (1) within at most 14 days before the current date, or in that the initial strategy parameters have been optimized at a time of year in the past, in particular the same time of year.

15. Method according to one of the preceding claims, **characterized in that** the current local context and the local context of the initial strategy parameters that are used, in particular those transmitted by the control assembly (5), is the same field or a nearby field, preferably **in that** the initial strategy parameters have been optimized by another agricultural working machine (1).

16. Method according to one of the preceding claims, **characterized in that** the similarity of the local contexts is determined by way of a similarity measure, in particular by the control assembly (5), preferably **in that** the similarity measure considers, in particular primarily considers, climatic zones of the respective local contexts.

17. Method according to Claim 16, **characterized in that** the climatic zones are divided into similar climatic zones according to Köppen-Geiger classification.

18. Method according to one of the preceding claims, **characterized in that** the agricultural working machine (1) is a combine harvester, preferably **in that** the optimized machine parameters (3) the rotational speed of the threshing drum and/or the gap width of the threshing drum

19. Agricultural working machine configured for the optimized determination of machine parameters of the agricultural working machine (1), wherein the agricultural working machine (1) has a driver assistance system (2) and a sensor assembly (4), wherein the agricultural working machine (1) is configured to perform an agricultural task in a local context, wherein the local context is formed by influencing variables which exist at the location where the agricultural task is performed and have an influence on the result of the agricultural task and are known to the agricultural working machine,
wherein the driver assistance system (2) is configured to determine in a determination routine (6) machine parameters (3) optimized by means of a parameterizable strategy (7) for the agricultural working machine (1) to perform the agricultural task, wherein the strategy (7) comprises strategy specifications (8), an instruction for use (9) and the optimized machine parameters (3), and wherein the strategy (7) can be parameterized by strategy parameters (10) for adapting to a local context,
wherein the driver assistance system (2) is configured to use the strategy specifications (8) in the determination routine (6) as input parameters of the instruction for use (9) in order to determine the optimized machine parameters (3), optimized with respect to the strategy specifications (8), as output parameters of the instruction for use (9) and
wherein the driver assistance system (2) is configured to parameterize the strategy (7) with initial strategy parameters at the beginning of performing the agricultural task in order to determine the optimized machine parameters (3),
**characterized**
**in that** the driver assistance system (2) is configured to use as initial strategy parameters strategy parameters (10) which have already been optimized by at least one agricultural working machine (1) in a similar local context.

## Revendications

1. Procédé de détermination optimisée de paramètres de machine d'une machine de travail agricole (1), la machine de travail agricole (1) possédant un système d'assistance au conducteur (2) et un arrangement de capteurs (4), la machine de travail agricole (1) exécutant une tâche de travail agricole dans un contexte local,
le système d'assistance au conducteur (2) déterminant des paramètres de machine optimisés (3) pour la machine de travail agricole (1) en vue de l'exécution de la tâche de travail agricole dans une routine de détermination (6) au moyen d'une stratégie paramétrable (7), la stratégie (7) comprenant des spécifications de stratégie (8), une prescription d'application (9) et les paramètres de machine optimisés (3), et la stratégie (7) pouvant être paramétrée par des paramètres de stratégie (10) en vue de l'adaptation à un contexte local,
le système d'assistance au conducteur (2) utilisant les spécifications de stratégie (8) comme paramètres d'entrée de la prescription d'application (9) dans la routine de détermination (6) afin de déterminer les paramètres de machine optimisés (3) de manière optimisée du point de vue des spécifications de stratégie (8) en tant que paramètres de sortie de la prescription d'application (9) et
le système d'assistance au conducteur (2) paramétrant la stratégie (7) avec des paramètres de stratégie initiaux au début de l'exécution de la tâche de travail agricole afin de déterminer les paramètres de machine optimisés (3),
caractérisé en ce
le système d'assistance au conducteur (2) utilise, comme paramètres de stratégie initiaux, des paramètres de stratégie (10) qui ont déjà été optimisés par au moins une machine de travail agricole (1) dans un contexte local similaire.

2. Procédé selon la revendication 1, **caractérisé en ce qu'**un arrangement de commande (5) destiné à la distribution de paramètres de stratégie initiale optimisés est prévu, **en ce que** l'arrangement de commande (5) possède une base de données (13) avec des paramètres de stratégie (10) enregistrés et des données associées relatives à des contextes locaux, **en ce que** les paramètres de stratégie (10) enregistrés de systèmes d'assistance au conducteur (2) de machines de travail agricoles (1) ont été optimisés successivement à partir de paramètres de stratégie initiaux en vue d'une adaptation au contexte local respectif dans des routines d'optimisation (14) lors de l'exécution de tâches de travail agricoles dans des contextes locaux,
**en ce que** le système d'assistance au conducteur (2) détermine des données contextuelles du contexte local de la tâche de travail agricole, notamment au moyen de l'arrangement de capteurs (4), et les communique à l'arrangement de commande (5), **en ce que** l'arrangement de commande (5) détermine des paramètres de stratégie initiaux adaptés au contexte local sur la base d'une comparaison des données contextuelles reçues avec les données contextuelles issues de la base de données (13) et les communique au système d'assistance au conducteur (2) de la machine de travail agricole (1) et **en ce que** le système d'assistance au conducteur (2) utilise les paramètres de stratégie initiaux communiqués comme paramètres de stratégie initiaux.

3. Procédé selon la revendication 1 ou 2, **caractérisé en ce que** la machine de travail agricole (1), pendant l'exécution de la tâche de travail agricole, en particulier au début de l'exécution de la tâche de travail agricole, dans une routine d'optimisation (14) commandée par le système d'assistance au conducteur (2), détermine des données de capteur concernant la réalisation des spécifications de stratégie (8) au moyen de l'arrangement de capteurs (14) et **en ce que** le système d'assistance au conducteur (2), dans la routine d'optimisation (4), optimise successivement les paramètres de stratégie initiaux sur la base des données de capteur et optimise ainsi davantage les paramètres de machine optimisés (3), de préférence **en ce que** le système d'assistance au conducteur (2) transmet les paramètres de stratégie (10) ainsi optimisés et les données contextuelles à l'arrangement de commande (5).

4. Procédé selon la revendication 3, **caractérisé en ce que** l'utilisateur ajuste au moins un, de préférence plusieurs, des paramètres de stratégie (10) après et/ou pendant la routine d'optimisation (14), de préférence **en ce que** le système d'assistance au conducteur (2) transmet les paramètres de stratégie (10) ainsi optimisés conjointement et les données contextuelles à l'arrangement de commande (5).

5. Procédé selon l'une des revendications précédentes, **caractérisé en ce que** la stratégie (7) comprend au moins un diagramme caractéristique (12) qui représente des relations entre les paramètres de machine et les spécifications de stratégie (8), en particulier sous la forme de fonctions mathématiques, **en ce que** le système d'assistance au conducteur (2) détermine, en particulier lit, au moyen de la prescription d'application (9), les paramètres de machine optimisés (3) sur la base des spécifications de stratégie (8) à partir du diagramme caractéristique (12) ou des diagrammes caractéristiques (12), de préférence **en ce que** le diagramme caractéristique (12) présente des coefficients (11) qui paramètrent les fonctions mathématiques.

6. Procédé selon la revendication 5, **caractérisé en ce que** la stratégie (7) comprend une fonction de coût (16), **en ce que** la fonction de coût (16) pondère les objectifs de stratégie (8), **en ce que** le système d'assistance au conducteur (2) détermine les paramètres de machine optimisés (3) à partir du diagramme caractéristique (12) ou des diagrammes caractéristiques (12) au moyen de la prescription d'application (9) de telle sorte que la fonction de coût (16) vise un objectif prédéfini, en particulier l'objectif de minimiser les coûts de la fonction de coût (16).

7. Procédé selon l'une des revendications 3 à 6, **caractérisé en ce que** le système d'assistance au conducteur (2), dans la routine d'optimisation (14), règle différents paramètres de machine qui forment les points de référence du diagramme caractéristique (12) ou des diagrammes caractéristiques (12) et détermine les coefficients (11) et/ou au moins un décalage d'un diagramme caractéristique (12) à partir des points de référence.

8. Procédé selon l'une des revendications 3 à 7, **caractérisé en ce que** la routine d'optimisation (14) est dépendante des paramètres de stratégie initiaux, de préférence **en ce que** le système d'assistance au conducteur (2) sélectionne les points d'appui (15) en fonction des paramètres de stratégie initiaux et/ou **en ce que** la routine d'optimisation (14) est raccourcie en fonction des paramètres de stratégie initiaux par rapport à une routine d'optimisation (14) basée sur des paramètres de stratégie initiaux non dépendants du contexte.

9. Procédé selon l'une des revendications précédentes, **caractérisé en ce que** les paramètres de stratégie initiaux comprennent des paramètres de machine optimisés (3), de préférence **en ce que** le système d'assistance au conducteur (2) règle les paramètres de machine optimisés (3) des paramètres de stratégie initiaux en tant que paramètres de machine optimisés (3) sur la machine de travail agricole (3) et règle les paramètres de machine (1) optimisés sur la machine de travail agricole (1) dans la routine de détermination (6) uniquement au cours de ou après la routine d'optimisation (14).

10. Procédé selon l'une des revendications précédentes, **caractérisé en ce que** les paramètres de stratégie initiaux comprennent des spécifications de stratégie (8) et/ou des paramètres de stratégie initiaux de la prescription d'application (9), de préférence **en ce que** les paramètres de stratégie initiaux de la prescription d'application (9) comprennent des poids (17) de la fonction de coût (16) et/ou des coefficients (11) des diagrammes caractéristiques (12).

11. Procédé selon l'une des revendications précédentes, **caractérisé en ce que** les spécifications de stratégie (8) sont sélectionnées par l'utilisateur, en particulier au niveau d'un terminal de la machine de travail agricole (1).

12. Procédé selon l'une des revendications précédentes, **caractérisé en ce que** les mêmes spécifications de stratégie (8) conduisent à des paramètres de machine optimisés (3) différents en fonction des paramètres de stratégie (10), de préférence **en ce que** les mêmes spécifications de stratégie (8) conduisent à des paramètres de machine optimisés (3) différents en fonction des paramètres de stratégie initiaux, en particulier des poids (17) de la fonction de coût (16), même dans le cas de diagrammes caractéristiques (12) théoriquement identiques.

13. Procédé selon la revendication l'une des revendications 2 à 12, **caractérisé en ce que** l'arrangement de commande (5) est disposé à l'extérieur de la machine de travail agricole (1), en particulier **en ce que** l'arrangement de commande (5) est formé par un ou plusieurs serveurs et communique avec la machine de travail agricole (1) par l'intermédiaire de l'Internet et/ou **en ce qu'**une pluralité de paramètres de stratégie (10) provenant d'autres machines de travail agricoles (1), notamment similaires, sont enregistrés dans la base de données (13).

14. Procédé selon l'une des revendications précédentes, **caractérisé en ce que** les paramètres de stratégie initiaux ont été optimisés par la même machine de travail agricole (1) dans un contexte local identique ou similaire, de préférence **en ce que** les paramètres de stratégie initiaux ont été optimisés par la même machine de travail agricole (1) au maximum 14 jours avant le jour actuel, ou **en ce que** les paramètres de stratégie initiaux ont été optimisés au cours d'une saison précédente, en particulier la même saison.

15. Procédé selon l'une des revendications précédentes, **caractérisé en ce que** le contexte local actuel et le contexte local des paramètres de stratégie initiaux utilisés, notamment transmis par l'arrangement de commande (5), sont le même champ ou un champ proche, de préférence **en ce que** les paramètres de stratégie initiaux ont été optimisés par une autre machine de travail agricole (1).

16. Procédé selon l'une des revendications précédentes, **caractérisé en ce que** la similitude des contextes locaux est déterminée par le biais d'une mesure de similitude, en particulier par l'arrangement de commande (5), de préférence **en ce que** la mesure de similarité prend en compte, en particulier principalement, les zones climatiques des contextes locaux respectifs.

17. Procédé selon la revendication 16, **caractérisé en ce que** les zones climatiques sont subdivisées en zones climatiques similaires selon la classification de Köppen-Geiger.

18. Procédé selon l'une des revendications précédentes, **caractérisé en ce que** la machine de travail agricole (1) est une moissonneuse-batteuse, de préférence **en ce que** les paramètres de machine optimisés (3) sont la vitesse de rotation du cylindre batteur et/ou l'écartement de fente du cylindre batteur.

19. Machine de travail agricole conçue pour la détermination optimisée de paramètres de machine de la machine de travail agricole (1), la machine de travail agricole (1) possédant un système d'assistance au conducteur (2) et un arrangement de capteurs (4), la machine de travail agricole (1) étant conçue pour exécuter une tâche de travail agricole dans un contexte local, le contexte local étant formé par des variables d'influence qui sont présentes sur le lieu d'exécution de la tâche de travail agricole et qui ont une influence sur le résultat de la tâche de travail agricole et sont connues de la machine de travail agricole,
le système d'assistance au conducteur (2) étant conçu pour déterminer des paramètres de machine optimisés (3) pour la machine de travail agricole (1) en vue de l'exécution de la tâche de travail agricole dans une routine de détermination (6) au moyen d'une stratégie paramétrable (7), la stratégie (7) comprenant des spécifications de stratégie (8), une prescription d'application (9) et les paramètres de machine optimisés (3), et la stratégie (7) pouvant être paramétrée par des paramètres de stratégie (10) en vue de l'adaptation à un contexte local,
le système d'assistance au conducteur (2) étant conçu pour utiliser les spécifications de stratégie (8) comme paramètres d'entrée de la prescription d'application (9) dans la routine de détermination (6) afin de déterminer les paramètres de machine optimisés (3) de manière optimisée du point de vue des spécifications de stratégie (8) en tant que paramètres de sortie de la prescription d'application (9) et
le système d'assistance au conducteur (2) étant conçu pour paramétrer la stratégie (7) avec des paramètres de stratégie initiaux au début de l'exécution de la tâche de travail agricole afin de déterminer les paramètres de machine optimisés (3),
caractérisé en ce
le système d'assistance au conducteur (2) est conçu pour utiliser, comme paramètres de stratégie initiaux, des paramètres de stratégie (10) qui ont déjà été optimisés par au moins une machine de travail agricole (1) dans un contexte local similaire.
